(19) Europäisches Patentamt
European Patent Office
Office européen des brevets

(11) **EP 1 690 790 B1**

(12) **EUROPEAN PATENT SPECIFICATION**

(45) Date of publication and mention
of the grant of the patent:
**05.03.2008 Bulletin 2008/10**

(51) Int Cl.:
*B64D 33/04* *(2006.01)*     *B64D 27/18* *(2006.01)*

(21) Application number: **05250796.9**

(22) Date of filing: **11.02.2005**

(54) **Turbine engine arrangements**

Triebwerkanordnung

Système de turbo-moteur

(84) Designated Contracting States:
**DE FR**

(43) Date of publication of application:
**16.08.2006 Bulletin 2006/33**

(73) Proprietor: **ROLLS-ROYCE PLC**
**London, SW1E 6AT (GB)**

(72) Inventors:
• **Howarth, Nicholas**
**Derby, DE22 3GU (GB)**

• **Freeman, Christopher**
**Farnsfield, Nottinghamshire NG22 8JN (GB)**

(74) Representative: **Gunn, Michael Alan**
**Rolls-Royce plc**
**P.O. Box 31**
**Derby DE24 8BJ (GB)**

(56) References cited:
**WO-A-99/60268**          **GB-A- 2 259 114**
**GB-A- 2 282 353**        **US-A- 5 058 617**
**US-A- 5 261 227**        **US-A- 5 319 922**
**US-A1- 2004 140 397**

**Description**

The present invention relates to turbine engine arrangements and more particularly to engines used with aircraft to provide propulsion.

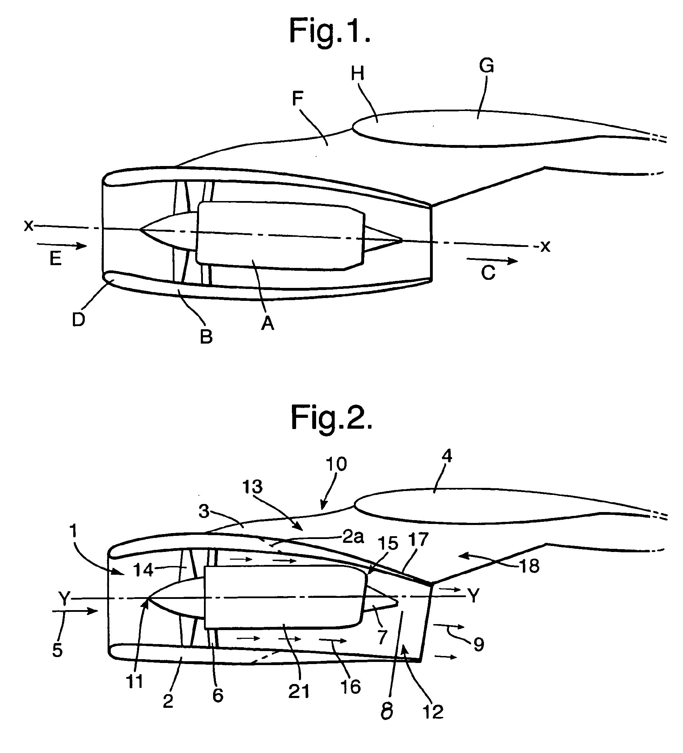

Use of turbine engines to provide propulsion for aircraft is well known. The turbine engine provides thrust or movement of the aircraft and traditionally as shown in Fig. 1 an engine A is located within a nacelle B whereby the principal axis of the engine X-X is positioned in order to optimise aircraft performance in terms of fuel economy. Thus, thrust from the engine is in the direction of arrowhead C which is angled relative to the axis of motion in order to achieve best lift to drag characteristics. This relationship requires that the inlet duct D along with the nacelle B and hot/cold nozzle vectoring is orientated as shown in Fig. 1. In such circumstances, as can be seen in Fig. 1 there is a slight turn in the input flow in the direction of arrowhead E in order to align with the engine axis X-X. This turning diminishes performance.

The current practice depicted in Fig. 1 aligns the engine axis X-X which generates a proportion vector in the direction of arrowhead C which has a component of lift in a proportion that achieves best lift to drag ratios when in combination with an associated airframe F. Thus to provide the most favourable pressure intake performance recovery requires a scarfed (i.e. angled) front duct D to the nacelle B in order to align the upwash in the front of a leading edge H of a wing G. This upwash is fundamental to a subsonic wing and exists to differing extents at almost all non aerobatic phases of flight. This scarf comprises a front end of the nacelle B which turns the airflow in the direction of arrowhead E into alignment with the engine axis X-X. Such turning of the airflow in the direction of arrowhead E creates a pressure loss in the airflow into the engine A and so reduces efficiency.

US 2004/140397, which shows all the features of the preamble of claim 1, discloses a scarf nozzle for a jet engine supported within a nacelle. The scarf nozzle is at an aft end of the nacelle. The scarf nozzle includes a first trailing edge portion and a second trailing edge portion. The second trailing edge portion is disposed aft of the first trailing edge portion. The scarf nozzle is configured to allow the nacelle to be integrated closer to a wing without adversely affecting the pressure gradient between the nacelle and the wing. The scarf nozzle allows a portion of an exhaust plume exiting the aft end of the nacelle to interact more favourably with an airflow along one or more surfaces adjacent the nacelle, thus delaying the onset of adverse pressure gradients and the formation of shock waves between the nacelle and the adjacent surfaces and between the adjacent surfaces and the exhaust plume.

In accordance with the present invention there is provided a turbine engine arrangement comprising a turbine engine in a flow path between an input duct and an output duct defined by a nacelle, the output duct and core exhaust are angled relative to the flow through the engine, the arrangement secured to an aircraft wing, the arrangement characterised in that the core and fan elements of the engine are positioned for alignment with the direction an upflow of the wing to avoid turning in the input flow through the engine whilst the output duct and core exhaust are angled relative to the flow through the engine to provide a component of lift..

Preferably, alignment of the engine is through the principal axis of the engine.

Typically, alignment of the engine is with the engine inclined towards the input duct. Alternatively, alignment of the engine is with the engine substantially perpendicular to the input duct.

Normally, the nacelle is secured to the wing through a pylon. Typically, the pylon is configured to allow positioning of the nacelle further forward relative to a wing leading edge to allow increased engine diameter and/or further displacement of the output flow through the engine from the wing.

Typically, the engine has an output nozzle such that the output flow is appropriately directed vectorally for efficient lift operation.

Alternatively, the engine is adjustable within the nacelle about mountings to maintain alignment with the upwash of the wing.

Generally, the angle of the upflow relative to the wing direction of motion of the wing is between 0° and 10°.

Generally, the angle between the final mixing nozzle and the flow through the engine is between 0° and 4°.

Generally, the angle between the core exhaust nozzle and the flow through the engine is between 0° and 4°.

Alternatively, a mounting is provided and which is tilted to allow the inlet duct and turbo machinery to remain aligned with the intake airflow as an angle of incidence changes between the upwash angle of the air approaching the wing and the angle of the intake duct as a flight progresses.

Furthermore, the arrangement may comprise a mechanical activation means for altering the duct and nozzle either individually or relatively to achieve appropriate alignment for the desired thrust vector as a proportion of the flow as a flight progresses. The mechanical activation means comprises the ducts comprising a number of displaceable individual petals.

An embodiment of the present invention will now be described by way of example only with reference to

Fig. 2 illustrating a schematic cross-section of a turbine engine arrangement in accordance with the invention;

Fig. 3 is a schematic illustration showing the interrelationships of thrust, lift and drag upon an engine associated with a wing;

Fig. 4 is a graphic representation illustrating lift against drag in comparison with angle of incidence; and,

Fig. 5 is a schematic rear view of an engine associated with a wing and in particular nozzle orientations with respect to noise generation from that engine.

Referring to Fig. 2 in which an engine 1 is located within a nacelle 2 which in turn is secured through a pylon 3 to a wing 4 of an aircraft. The engine 1 is a turbo fan which is arranged for optimisation of exhaust duct/nozzle design to allow the turbine machinery axis Y-Y of the engine 1 to lie closer to the optimum vector with respect to intake airflow in the direction of arrowhead 5 to be achieved. The engine 1 is secured through mountings 6 to present the engine 1 perpendicular to the flow 5 at cruise. In such circumstances, there is no turn in the flow 5 prior to flow through the engine 1 and so reduces inefficiency caused by such turning in the flow 5. Thus, the flow 5 is propelled through the engine 1 and exhausted through an output nozzle 7 and duct 8 along with a final nozzle 17. This duct 8 creates an inclined thrust direction depicted by arrowhead 9 which provides a component of lift. In such circumstances, an engine arrangement 10 in accordance with the present invention achieves optimal alignment of the incident air in the direction of flow 5 through the engine 1 and optimal thrust vector for lift to drag ratio in the direction of arrowhead 9.

The engine 1 and in particular the turbine machinery are aligned with the upwash created by the wing 4. Thus, air flow at the input duct 11 is subjected to no turning such that there is higher recovery and fan 14 stability due to even presentation of the flow 5 to the turbine machinery.

At the output nozzle/duct portion 12 of the arrangement 10 as indicated previously a vertical component is provided in the flow 9. This vertical component is achieved through appropriate vectoring of the duct 8 and nozzle 7 along with final nozzle 17. This vectoring may vary through displacement of surfaces in the ducting 8 or nozzle 7 to achieve best lift performance.

The vectored nacelle 2 allows increased clearance in a pylon portion 13 in comparison with conventional previous arrangements as depicted in Fig. 1. Thus, greater turbo fan 14 diameters can be accommodated for available fixed ground clearance of the wing 4 relative to the ground. The pylon 3 at a rear portion 18 presents the duct 8 of the nacelle 2 further from the wing 4. In such circumstances, there is reduced interference drag with increased wing efficiency.

The duct 8 at an upper portion may be impinged by hot gas flows from the nozzle 7. Thus, hot gas flows from in particular an upper part 15 of the nozzle 7 may penetrate the outer duct 8 to provide propulsion. Such an arrangement would allow re-energisation of flow boundary layers created in the pylon 3 and the outer surfaces of nacelle 2.

In summary, the engine arrangement 10 depicted in Fig. 2 provides the advantages of improved intake flow 5 efficiency through eliminating turning in the flow as presented to the engine 1 and in particular the fans 14, improved clearance for the wing 4 and in particular a leading edge 16 of that wing, the ability to provide greater fan 14 diameters for a given airframe geometry and reduced nacelle 2/wing 4 interference drag.

The present invention utilises aligning of the engine 1 to the upwash of the wing 4 whilst achieving a vertical component for lift in the output flow 9 through appropriate angling vectors for the duct 8/final nozzle 17 in association with the output nozzle 7 of the engine 1. The objective is to provide substantial alignment of the input duct 11 with the upwash throughout operation. In such circumstances, in normal operation it will be appreciated that fuel load diminishes as fuel is burnt to provide propulsion in the engine 1. In such circumstances, lift requirements are reduced and the angle of attack required by the wing 4 alters and the lift to drag ratios change.

The ultimate thrust vector angle for the flow 9 may be given by designing the wing in conjunction with the engine installation. Wing lift may be reduced by providing a delta lift from the thrust vector.

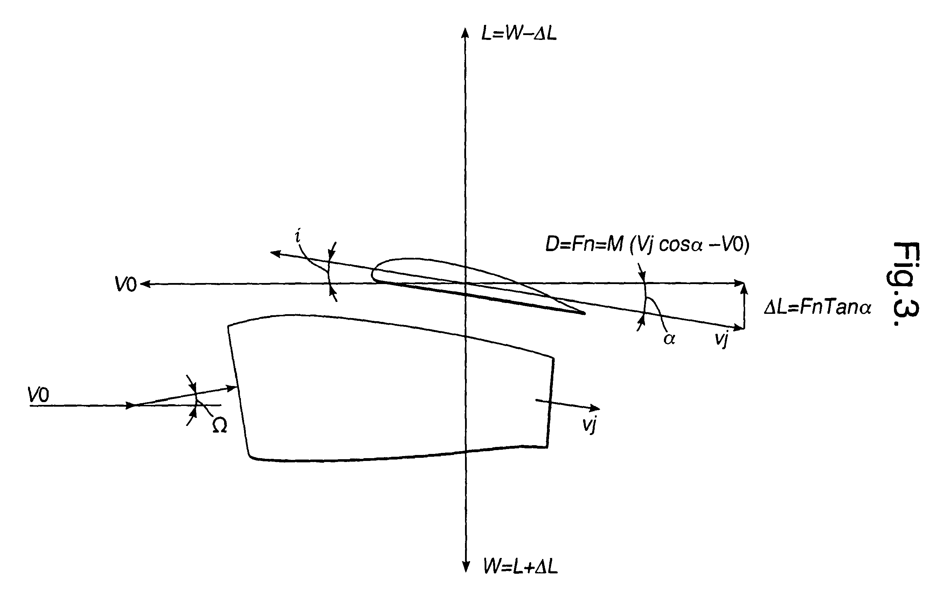

Figure 3 provides further details of delta lift in the thrust vector by way of a schematic diagram. Figure 3 illustrates the relationships in particular between lift vector delta L, nett thrust Fn and drag D. Thus,

$$\text{delta L} = \text{Fn Tan}\alpha$$

$$Fn = D$$

$$D = M\ (Vj\ Cos\alpha - V0)$$

where Fn = nett thrust
L = lift
D = drag
W = weight
M = mass flow
Vj = jet velocity
V0 - flight velocity
$\Delta L$ = delta lift
$\alpha$ = thrust vector angle (typically 0-4 degrees f(i)) in steady state
i = angle of incidence (typically 0-15 degrees f(mach)) in steady state
$\Omega$ = upwash angle (typically 0-10 degrees f(i) and f(mach)) in steady state

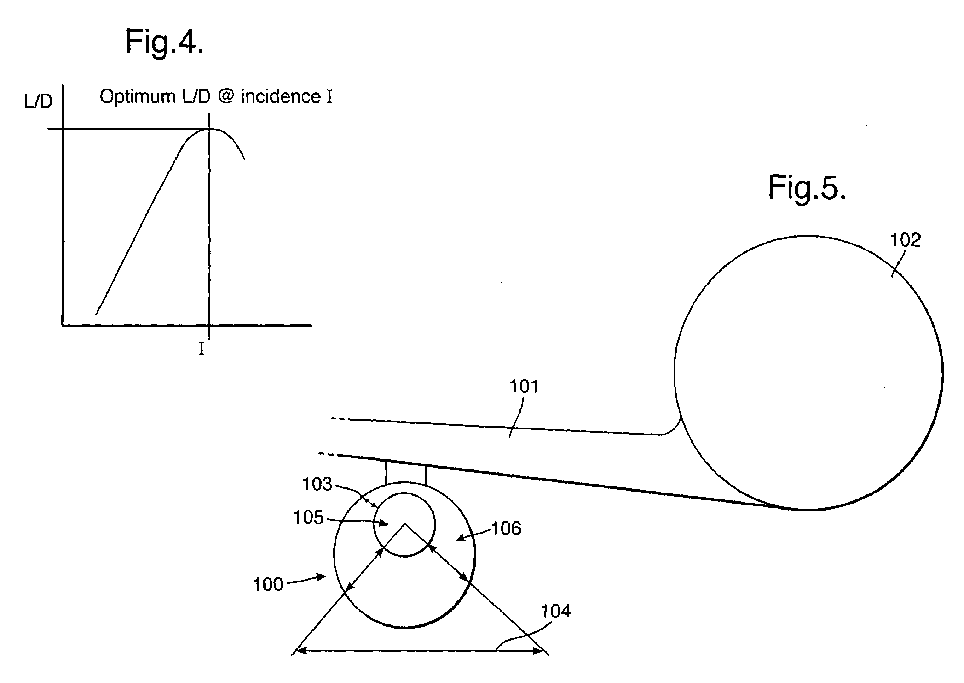

It will be noted that an upwash is caused by the presence of a subsonic wing approaching the normally stationary atmosphere. This reduces the pressure field above the wing and induces a vertical component in the atmosphere prior to the wing's arrival. In such circumstances it will be appreciated that the relationships

$$L = W - \Delta L$$

$$W = L + \Delta L$$

define the equilibrium condition with respect to suspension of the wing and engine and associated aircraft fuselage in use. The object of the present invention is to create a better balance whereby $\Delta L$ is set such that W is substantially equivalent to lift whilst the engine thrust, and hence fuel burn, is optimised in sympathy with the wing performance. Reduced wing lift means less drag which means less thrust in the direction of the flight vector V0. The optimisation lies in defining the additional thrust required in the direction of the thrust vector. More delta lift leads to less thrust required in the flight direction but more in the thrust vector direction. A differential equation (s) expressing the specific wing and engine performance (s) must be solved to minimise fuel burn such that the optimum thrust vector angle for each application may be defined. As a flight progresses, fuel is burnt and lift requirements change. To satisfy lower lift at a known Mach number it will be understood that the wing incidence, i, is reduced. It may be observed from fig 4 that this may move the wing performance away from optimum UD. To counter this the thrust vector should be altered accordingly. In accordance with the present invention this ultimate thrust vector is achieved by altering the duct 8 and nozzle 7 either individually or relatively to achieve appropriate alignment for the desired thrust vector as a proportion of the flow 9. Such alterations in the duct 8 and nozzle 7 will typically be achieved through hydraulic ram or other mechanical activation means (see US 5746391, EP0115914, GB481320, GB1270538, GB2275308). The ducts 8 may comprise a number of individual petals displaced in order to create the desired output flow 9 vectoring to achieve the desired thrust angle. A mechanically simpler arrangement may be realised by the use of fixed ducts or nozzles aligned to a best compromise angle. It will equally be appreciated that as the angle of incidence changes both the upwash angle of the air approaching the wing and the angle of the intake duct 11 relative to the upwash will change. To allow the inlet duct 11 and turbo machinery 14 to remain aligned with the intake airflow the engine 1 may be tilted on the mounting 6, again by hydraulic or other mechanical means.

By providing the core engine 21 in substantial alignment with the uplift flow as indicated above, there is no turning in the flow 5 presented to the fan(s) 4 of the engine 1 as well as in the flow through the engine 1 such that the engine 1 can operate to high efficiency. The present invention utilises an external duct 8 in order to create the necessary optimum thrust vector, that is to say a vertical component in the outflow 9 for lift. The core engine 21 provides through its nozzle 7 and exit duct 17 a gas flow which is controlled and deflected for lift performance. Bypass airflows illustrated as arrowheads 16 created by the fan 14 in Figure 2 are gently turned by the inner casing surfaces of the nacelle 2 such that these flows 16 have the vertical component necessary for an optimum thrust vector. Typically, if the core engine 21 is fixed in its axial presentation to optimise alignment between the flow 5 and the fan 14 along with engine 1 then these bypass airflows 16 when guided by an upper rear portion 17 of the duct 8 will impinge and cross the core engine 21 jet stream propelled in the direction of the principal axis Y-Y. In such circumstances, in addition to providing the vertical flow component for the flow 9 these bypass flows 16 may mask the more noisy direct jet stream from the core engine 21 through the nozzle 9 to more acceptable noise levels.

Figure 5 provides a schematic rear view of an engine 100 secured to a wing 101 which in turn is attached to an aircraft fuselage 102. In such circumstances it will be appreciated that an upper section 103 of the exhaust gas flow has a higher mean jet velocity due to a larger proportion of the exhaust area occupied by faster hot jet flows in comparison with an area 104 in the lower arc where a lower specific thrust than in the top arc 103 is experienced. This consequent lower mean jet velocity creates noise variation. It will be understood that there is a hot nozzle 105 and a cold nozzle 106 for providing differential exhaust gas flow temperatures and as indicated flow rates. As indicated the present invention allows the bypass flows from the cold nozzle to mask the noisier direct jet stream from the core 21 taken from the hot nozzle 105. The present engine arrangement 1 allows efficient operation of the fan 14 in terms of inlet flow 5 alignment whilst with the upwash angle whilst still achieving a vertical component of velocity at exhaust 17 through the duct 8 acting upon the bypass 16 and core 21 flows.

Use may also be made of the vectoring features, both nozzle/duct and adjustable engine mounting features, to actively position the engine/exhaust to minimise noise footprint, especially for take off.

In an alternative embodiment of the present invention the nacelle 2 may be shortened or truncated as shown by broken line 2a.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A turbine engine arrangement comprising a turbine engine (1) in a flow path between an input duct (11) and an output duct (8) defined by a nacelle (2), the output duct (8) and core exhaust (7) are angled relative to the flow (5) through the engine (1), the arrangement secured to an aircraft wing (4), the longitudinal axis of the output duct (8) and the longitudinal axis of the core exhaust (7) are angled relative to the flow (5) through the engine (1) to provide a component of lift, the arrangement **characterised in that** the longitudinal axis of the core (21) and the longitudinal axis of the fan (14) elements of the engine are positioned for alignment with the direction of an upflow of the wing (4) to avoid turning in the input flow (5) through the engine (1).

2. An arrangement as claimed in claim 1 wherein alignment of the engine's rotational axis (Y-Y) is inclined towards the plane of the input duct (11).

3. An arrangement as claimed in claim 1 wherein alignment of the engine's rotational axis (Y-Y) is substantially perpendicular to the plane of the input duct (11).

4. An arrangement as claimed in claim 1, 2 or 3 wherein the nacelle (2) is secured to the wing (4) through a pylon (3).

5. An arrangement as claimed in claim 4 wherein the pylon (3) is configured to allow positioning of the nacelle (2) with greater clearance relative to a leading edge of wing (4) to allow increased fan (14) diameter and/or further displacement of the flow (9) from the engine (1) from the wing (4).

6. An arrangement as claimed in any preceding claim wherein the engine (1) has an output nozzle(s) (7, 17) such that the output flow is appropriately directed vectorally for efficient lift operation.

7. An arrangement as claimed in any preceding claim wherein the engine (1) is adjustable within the nacelle (2) about mountings (6) to maintain alignment with the upwash flow of the wing (4).

8. An arrangement as claimed in any preceding claim wherein the alignment of the engine with the upflow of the wing is through the principal axis (Y-Y) of the engine (1) i.e. parallel.

9. An arrangement as claimed in claim 1 wherein the angle of the upflow relative to the wing direction of motion of the wing is between 0° and 10°.

10. An arrangement as claimed in claim 1 wherein the angle between the final mixing nozzle and the flow through the engine is between 0° and 4°.

11. An arrangement as claimed in claim 1 wherein the angle between the core exhaust nozzle and the flow through the engine is between 0° and 4°.

12. An arrangement as claimed in any preceding claim wherein a mounting (6) is provided and which is tilted to allow the inlet duct (11) and turbo machinery (14) to remain aligned with the intake airflow as an angle of incidence changes between the upwash angle of the air approaching the wing and the angle of the intake duct (11) as a flight progresses.

13. An arrangement as claimed in any preceding claim wherein the arrangement comprises a mechanical activation means for altering the duct (8) and nozzle (7) either individually or relatively to achieve appropriate alignment for the desired thrust vector as a proportion of the flow (9) as a flight progresses.

14. An arrangement as claimed in claim 3 wherein the mechanical activation means comprises the ducts (8) comprising a number of displaceable individual petals.

**Patentansprüche**

1. Turbinentriebwerksanlage mit einem Turbinentriebwerk (1) in einem Strömungspfad zwischen einem Eintrittskanal (11) und einem Austrittskanal (8), die durch eine Gondel (2) definiert werden, wobei der Austrittskanal (8) und der Kernaustritt (7) relativ zur Strömung durch das Triebwerk (1) im Winkel angestellt sind, wobei die Anlage an einem Tragflügel (4) eines Flugzeugs aufgehängt ist und die Längsachse des Austrittskanals (8) und die Längsachse des Kernaustritts (7) im Winkel gegenüber der Strömung (5) durch das Triebwerk (1) angestellt sind, um eine Auftriebskomponente zu erzeugen, **dadurch gekennzeichnet, dass** die Längsachse der Kernelemente (21) und die Längsachse der Fanelemente (14) auf die Aufwindrichtung des Tragflügels (4) ausgerichtet sind, um die Eintrittsströmung (5) durch das Triebwerk (1) abzulenken.

2. Anlage nach Anspruch 1, bei welcher die Ausrichtung der Drehachse (Y-Y) des Triebwerks gegenüber der Ebene des Eintrittskanals (11) im Winkel angestellt ist.

3. Anlage nach Anspruch 1, bei welcher die Ausrichtung der Drehachse (Y-Y) des Triebwerks im Wesentlichen senkrecht zur Ebene des Eintrittskanals (11) verläuft.

4. Anlage nach einem der Ansprüche 1, 2 oder 3, bei welcher die Gondel (2) am Tragflügel (4) über einen Pylon (3) aufgehängt ist.

**5.** Anlage nach Anspruch 4, bei welcher der Pylon (3) so angeordnet ist, dass die Gondel (2) mit einem vergrößerten Zwischenraum relativ zur Vorderkante des Tragflügels (4) angeordnet ist, um einen vergrößerten Durchmesser des Fan (14) zu ermöglichen und/oder die Strömung (9) des Triebwerks (1) weiter vom Tragflügel (4) weg zu versetzen.

**6.** Anlage nach einem der vorhergehenden Ansprüche, bei welcher das Triebwerk (1) eine Austrittsdüse (7, 17) derart aufweist, dass die Austrittsströmung vektoriell so gerichtet ist, dass im Betrieb ein Auftrieb erfolgt.

**7.** Anlage nach einem der vorhergehenden Ansprüche, bei welcher das Triebwerk (1) in der Gondel (2) über Lager (6) einstellbar ist, um eine Ausrichtung auf die Aufwindströmung des Tragflügels (4) zu bewirken.

**8.** Anlage nach einem der vorhergehenden Ansprüche, bei welcher das Triebwerk auf die Aufwärtsströmung über die Hauptachse (Y-Y) des Triebwerks (1) ausgerichtet ist, d.h. parallel hierzu ist.

**9.** Anlage nach Anspruch 1, bei welcher die Aufwärtsströmung relativ zur Flügelrichtung bei Bewegung des Flügels in einem Winkel zwischen 0° und 10° angestellt ist.

**10.** Anlage nach Anspruch 1, bei welcher der Winkel zwischen der Endmischdüse und der Strömung durch das Triebwerk zwischen 0° und 4° beträgt.

**11.** Anlage nach Anspruch 1, bei welcher der Winkel zwischen der Kernabgasdüse und der Strömung durch das Triebwerk zwischen 0° und 4° beträgt.

**12.** Anlage nach einem der vorhergehenden Ansprüche, bei welcher ein Lager (6) vorgesehen ist und dieses geneigt ist, damit der Eintrittskanal (11) und die Turbomaschine (14) auf die Eintrittsluftströmung ausgerichtet bleibt, wenn sich ein Einfallswinkel zwischen dem Aufwindwinkel der sich dem Tragflügel nähernden Luft und dem Winkel des Eintrittskanals (11) bei fortgesetztem Flugverfahren ändert.

**13.** Anlage nach einem der vorhergehenden Ansprüche, bei welcher die Anlage eine mechanische Aktivierungseinrichtung aufweist, um Kanal (8) und Düse (7) entweder individuell oder relativ zu ändern, um eine geeignete Ausrichtung für den gewünschten Schubvektor als Anteil der Strömung (9) zu erreichen, wenn sich der Flug fortsetzt.

**14.** Anlage nach Anspruch 13, bei welcher die mechanischen Aktivierungsmittel aus Kanälen (8) mit mehreren verstellbaren einzelnen Schaufeln bestehen.

**Revendications**

**1.** Arrangement de moteur à turbine comprenant un moteur à turbine (1) dans une trajectoire d'écoulement entre une conduite d'entrée (11) et une conduite de sortie (8) définie par une nacelle (2), la conduite de sortie (8) et l'échappement primaire (7) étant inclinés par rapport au flux (5) à travers le moteur (1), l'arrangement étant fixé à une aile d'avion (4), l'axe longitudinal de la conduite de sortie (8) et l'axe longitudinal de l'échappement primaire (7) étant inclinés par rapport à l'écoulement (5) à travers le moteur (1) pour fournir un composant de portance, l'arrangement étant **caractérisé en ce que** l'axe longitudinal de la veine chaude (21) et l'axe longitudinal des éléments de la soufflante (14) du moteur sont positionnés en alignement avec la direction d'un courant ascendant de l'aile (4) pour éviter une déviation dans l'écoulement d'entrée (5) à travers le moteur (1).

**2.** Arrangement selon la revendication 1, dans lequel l'alignement de l'axe de rotation (Y-Y) du moteur est incliné en direction du plan de la conduite d'entrée (11).

**3.** Arrangement selon la revendication 1, dans lequel l'alignement de l'axe de rotation (Y-Y) du moteur est substantiellement perpendiculaire au plan de la conduite d'entrée (11).

**4.** Arrangement selon la revendication 1, 2 ou 3, dans lequel la nacelle (2) est fixée à l'aile (4) à travers un mât (3).

**5.** Arrangement selon la revendication 4, dans lequel le mât (3) est configuré pour permettre le positionnement de la nacelle (2) avec un plus grand écart par rapport au bord d'attaque de l'aile (4) pour autoriser un diamètre augmenté de la soufflante (14) et/ou un déplacement supplémentaire de l'écoulement (9) du moteur (1) à partir de l'aile (4).

**6.** Arrangement selon l'une quelconque des revendications précédentes, dans lequel le moteur (1) a une tuyère de sortie (7, 17) de telle sorte que l'écoulement de sortie est dirigé vectoriellement de manière appropriée pour une opération de portance efficace.

**7.** Arrangement selon l'une quelconque des revendications précédentes, dans lequel le moteur (1) est ajustable au sein de la nacelle (2) autour de supports (6) pour maintenir un alignement avec l'écoulement de déflection vers le haut de l'aile (4).

**8.** Arrangement selon l'une quelconque des revendications précédentes, dans lequel l'alignement du moteur avec le courant ascendant de l'aile est à travers l'axe principal (Y-Y) du moteur (1) c'est-à-dire parallèle.

9. Arrangement selon la revendication 1, dans lequel l'angle du courant ascendant par rapport à la direction de l'aile du mouvement de l'aile est entre 0° et 10°.

10. Arrangement selon la revendication 1, dans lequel l'angle entre la tuyère de mélange finale et l'écoulement à travers le moteur est entre 0° et 4°.

11. Arrangement selon la revendication 1, dans lequel l'angle entre la tuyère de sortie de la veine chaude et l'écoulement à travers le moteur est entre 0° et 4°.

12. Arrangement selon l'une quelconque des revendications précédentes, dans lequel un support (6) est prévu et qui est incliné pour permettre à la conduite d'entrée (11) et aux turbomachines (14) de rester alignées avec le flux d'air d'admission selon un angle de changements d'incidences entre l'angle de déflection vers le haut de l'air s'approchant de l'aile et l'angle de la conduite d'admission (11) lorsque le vol progresse.

13. Arrangement selon l'une quelconque des revendications précédentes, dans lequel l'arrangement comprend des moyens d'activation mécaniques pour modifier la conduite (8) et la tuyère (7) soit individuellement soit relativement pour réaliser un alignement approprié pour le vecteur de poussée désiré proportionnellement à l'écoulement (9) lorsque le vol progresse.

14. Arrangement selon la revendication 13, dans lequel les moyens d'activation mécaniques comprennent les conduites (8) comprenant de nombreux pétales individuels déplaçables.

# Fig.1.

# Fig.2.

# Fig.3.

$\Delta L = Fn Tan\alpha$

$D = Fn = M (Vj cos\alpha - V0)$

$L = W - \Delta L$

$W = L + \Delta L$

Vj

α

Vj

i

V0

Ω

V0

## Fig.4.

L/D | Optimum L/D @ incidence I

I

## Fig.5.

102

101

103

105

106

100

104

EP 1 690 790 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004140397 A
- US 5746391 A
- EP 0115914 A
- GB 481320 A
- GB 1270538 A
- GB 2275308 A